# EUROPÄISCHE PATENTSCHRIFT

(11) **EP 4 420 858 B1**
(45) Veröffentlichungstag und Bekanntmachung des Hinweises auf die Patenterteilung: **05.11.2025**
(21) Anmeldenummer: 24154418.8
(22) Anmeldetag: 29.01.2024
(51) Int. Cl.: B29C 49/56, B29C 49/06, B29C 49/12, B29C 49/36, B29C 49/58, B29C 49/46, B29C 49/48, B29K 67/00, B29L 31/00

(54) **BEHÄLTERBEHANDLUNGSANLAGE ZUM BEHANDELN VON BEHÄLTERN**
CONTAINER TREATMENT SYSTEM FOR TREATING CONTAINERS
INSTALLATION DE TRAITEMENT DE RÉCIPIENTS POUR TRAITER DES RÉCIPIENTS

(30) Priorität: 27.02.2023 DE 102023104677
(43) Veröffentlichungstag der Anmeldung: 28.08.2024
(73) Patentinhaber: KHS GmbH, 44143 Dortmund (DE)
(72) Erfinder: Choinski, Julian, 22359 Hamburg (DE); Klatt, Dieter, 22147 Hamburg (DE); Polzin, Christian, 23843 Bad Oldesloe (DE); Baumgarte, Rolf, 22926 Ahrensburg (DE)
(74) Vertreter: Andrejewski - Honke Patent- und Rechtsanwälte Partnerschaft mbB

(56) Entgegenhaltungen:
- EP-B1- 3 386 715
- WO-A1-03/050438
- DE-A1- 102012 104 754
- US-A1- 2009 011 069
- US-A1- 2018 154 571

## Beschreibung

Die Erfindung betrifft eine Behälterbehandlungsanlage mit zumindest einer eine Vielzahl von Behandlungsmodulen aufweisenden Transportvorrichtung, wobei die Behandlungsmodule dazu eingerichtet sind, Behälter während eines Transports entlang eines Transportpfades zu behandeln und mit zumindest einem als Kurvenführung ausgebildeten Stellantrieb zum Steuern der Behandlungsmodule, wobei der Stellantrieb jeweils eine an den Behandlungsmodulen angeordnete Führungsrollenanordnung aufweist, wobei eine erste Führungsrolle mit einer ersten Führungskurve und eine zweite Führungsrolle mit einer gegenüberliegenden zweiten Führungskurve in Eingriff gebracht werden kann. Gattungsgemäße Vorrichtungen sind in den Patentschriften WO03/050438A1, US2009/011069A1 und US2018/154571A1 beschrieben.

Die Erfindung bezieht sich hierbei insbesondere auf Behälterbehandlungsanlagen aus dem Bereich der Lebensmittelindustrie insbesondere der Getränkeindustrie. Entsprechend handelt es sich bei den zu behandelnden Behältern um Getränkebehälter z. B. um Getränkeflaschen aus Glas oder Kunststoff. Bei den Behältern kann es sich darüber hinaus auch um sogenannte Vorformlinge bzw. Preforms handeln, welche innerhalb der Behälterbehandlungsanlage erst zu Getränkebehältern ausgeformt werden. Dies erfolgt üblicherweise über eine sogenannte Blasvorrichtung insbesondere Streckblasvorrichtung, bei der im Zuge der Behandlung ein Blasfluid z. B. Druckluft in die Vorformlinge eingeleitet wird. welches die Vorformlinge derart mit Druck beaufschlagt, dass diese an eine Blasform herangedrückt werden.

Die Blasform weist hierzu eine Innenkavität auf, welche der Form des zu fertigenden Behälters entspricht. In diesem Zusammenhang ist anzumerken, dass die Vorformlinge in der Regel einen bereits fertig ausgebildeten Kopfabschnitt aufweisen, welcher während des Umformens außerhalb der Blasform angeordnet ist und welcher bereits über ein Außengewinde zur Aufnahme einer Verschlusskappe aufweist. Anstelle von Druckluft eignet sich auch ein flüssiges Blasfluid zum Einbringen in die Behälter. Hierbei handelt es sich insbesondere um ein flüssiges Füllmedium z. B. ein Getränk, wodurch einerseits durch Einbringen des Füllmediums die Behälter plastisch verformt werden und zugleich das Füllmedium innerhalb des Behälters angeordnet werden kann. Ein solches Verfahren wird auch als Formfill-Verfahren bezeichnet.

Grundsätzlich bezieht sich die Erfindung auf alle Arten von Behandlungsanlagen, in welchen eine Behandlung der Behälter erfolgt. Diese Behandlung können die Behälter beispielsweise in mechanischer, optischer oder sonstiger Art und Weise behandelt werden, so dass die Behandlung nicht ausschließlich auf eine Blasumformung beschränkt ist.

Im Rahmen derartiger Behandlungsanlagen ist es bekannt, eine Vielzahl von verschiedenen Steueraktionen mithilfe von Stellantrieben durchzuführen, welche als Kurvenführung ausgebildet sind. In diesem Zusammenhang ist mit Steuern gemeint, dass in irgendeiner Form die Behandlungsmodule oder die über die Behandlungsmodule geführten Behälter beeinflusst werden. Beispielsweise eignen sich derartige Stellantriebe zum Öffnen und Schließen der Blasformen.

Die Kurvenführung besteht hierbei einerseits aus zumindest einer Führungsrolle und einer zugeordneten Führungskurve, wobei die Führungsrolle im Zuge der Bewegung der Behandlungsmodule an der Führungskurve abrollen kann und entsprechend zumindest teilweise mit dieser in Eingriff steht. Die Führungskurve weist hierbei einen Kurvenverlauf auf, welcher eine Bewegung der Führungsrolle senkrecht zur Drehachse und senkrecht zur Bewegungsrichtung ermöglicht. Hierdurch lassen sich verschiedene Steueraktionen z. B. Stellaktionen rein mechanisch steuern, wodurch sich insbesondere eine geringe Fehleranfälligkeit ergibt, da aufgrund des festgelegten Konturverlaufs der Führungskurve allenfalls geringfügige Abweichungen im Steuerungsverlauf möglich sind. Um eine gegenläufige Steueraktion zu ermöglichen sind dann entsprechend zwei Führungskurven vorgesehen, welche entlang gegenüberliegender Führungskurven abrollbar sind. Beispielsweise ist es hierdurch möglich, ein Öffnen und ein Schließen einer Blasform zu ermöglichen, wobei die unterschiedlichen Bewegungen durch unterschiedliche Führungsrollen und zugeordnete Führungskurven bewegt wird.

Wenngleich sich die Führungskurven lediglich über einen gewissen Abschnitt des Transportpfades erstrecken, so ist insbesondere der Übergabebereich zwischen diesen beiden Führungskurven von Bedeutung, da die Führungsrollen zumindest für einen kurzen Abschnitt kraftfrei bzw. mit einem Schlupf zwischen den beiden Führungskurven angeordnet sein können. Dies hat allerdings zur Folge, dass zumindest für ein diesen Abschnitt das mangelnde Abrollverhalten zu einem erhöhten Reibungsverschleiß führen können, welchem in der Vergangenheit beispielsweise damit begegnet wurde, dass sowohl die Führungsrollen als auch die zugeordneten Stellkurven an den Oberflächen gehärtet wurden, um den Verschleiß zu minimieren.

Gerade bei besonders großen Behälterbehandlungsanlagen, welche einen hohen Behälterdurchsatz von zumindest 54.000 Behälter pro Stunde ermöglichen sollen, sind diese Maßnahmen jedoch nicht ausreichend, um den Betrieb über einen langen Zeitraum aufrechterhalten zu können.

Vor diesem Hintergrund liegt der vorliegenden Erfindung die Aufgabe zugrunde, eine Behälterbehandlungsanlage anzugeben, welche einen verschleißarmen Betrieb und zugleich eine zuverlässige Steuerung der Behandlungsmodule ermöglicht.

Gegenstand und Lösung dieser Aufgabe ist eine Behälterbehandlungsanlage gemäß Patentanspruch 1. Erfindungsgemäß ist vorgesehen, dass die Führungsrollenanordnung zumindest ein elastisch verformbares Ringelement aufweist. Mithilfe dieses elastisch verformbaren Ringelementes ist es möglich, die Führungsrollen der Führungsrollenanordnung über weite Bereiche der Führungskurven mit einer vordefinierten Anpresskraft zu betreiben. Die vordefinierte Anpresskraft liegt hierbei bevorzugt zumindest zwischen 120 und 300 N.

Die Erfindung geht von der Kenntnis aus, dass mithilfe eines solchen Ringelementes sichergestellt werden kann, dass auch im Fall von Drehmomentschwankungen oder anderweitigen Krafteinwirkungen auf die Führungskurve stets eine minimale Anpresskraft gewährleistet werden kann, welche auch beim Übergang zwischen den einzelnen Führungskurven wirkt und hierdurch ein reibungsarmes Abrollen der Führungsrollen an der entsprechend zugeordneten Führungskurve ermöglicht.

Die erforderliche Anpresskraft kann hierbei gemäß einer bevorzugten Ausgestaltung dadurch erreicht werden, dass das elastische Ringelement in einem an die erste und/oder die zweite Führungskurve angepressten Zustand gegenüber einem kraftfreien Zustand zwischen 0,05 und 0,8 mm verformt wird. Entsprechend wird das Ringelement zumindest an eine der Führungskurven angedrückt und hierdurch verformt. Im Zuge der Verformung entsteht eine Anpresskraft, welche ausreichend ist, damit die Führungsrollen möglichst schlupffrei an der entsprechend zugeordneten Führungsrolle abrollen können.

Für eine solche Ausgestaltung ist es insbesondere sinnvoll, wenn das Material des Ringelementes ausgewählt ist aus der Gruppe Gummi, thermoplastisches Elastomere, Polyurethane und Polyamide. Mithilfe dieser Materialien und der zuvor erwähnten Verformung hat sich der Betrieb als besonders wirkungsvoll erwiesen.

Eine bevorzugte Weiterbildung der Erfindung sieht ferner vor, dass die zweite Führungsrolle oberhalb der ersten Führungsrolle in einer gemeinsamen Drehachse angeordnet ist, wobei das elastische Ringelement an einer der Führungsrollen angeordnet oder gebildet ist. Entsprechend ist auch die zweite Führungskurve oberhalb der ersten Führungskurve angeordnet, wobei die entsprechenden Führungsrollen selbstverständlich lediglich mit der ihr zugeordneten Führungskurve in Eingriff gebracht werden können, um ein Blockieren der Abrollbewegung zu verhindern. Durch die Anordnung des elastischen Ringelementes unmittelbar an einer der Führungsrollen oder durch die Bildung des Ringelementes an einer der Führungsrollen kann im ausreichenden Maße sichergestellt werden, dass im Zuge der elastischen Verformung die Anpresskraft eine schlupffreie Führung der Führungsrollen an der ihr zugeordneten Führungskurve ermöglicht.

Bezüglich der Ausgestaltung der Führungsrollen und der Lage des elastischen verformbaren Ringelementes eignen sich grundsätzlich verschiedene Ausgestaltungsformen, welche im Rahmen der erfindungsgemäßen Behälterbehandlungsanlage eingesetzt werden können. Beispielsweise kann das Ringelement radial außerhalb an einer der Führungsrollen, insbesondere an der ersten Führungsrolle, angeordnet sein. Gemäß einer solchen Ausgestaltung umschließt das Ringelement die Führungsrolle und bildet somit den Abschnitt, welcher unmittelbar an der Führungskurve anliegt. Vorzugsweise handelt es sich hierbei um die erste Führungsrolle bzw. die erste Führungskurve. Eine solche Ausgestaltung ist dann sinnvoll, wenn die zu überbringende Stellaktion oberhalb der Führungsrollenanordnung erfolgt. In diesem Fall wirken auf die erste und damit untere Führungsrolle geringere Lasten, sodass gerade in diesem Bereich die Anordnung des Ringelementes besonders sinnvoll ist. Selbstverständlich kann aber auch eine genau umgekehrte Anordnung sinnvoll sein, wenn die zu erbringende Steueraktion unterhalb der Führungsrollenanordnung erfolgt. In diesem Fall ist dann das elastische Ringelement bevorzugt an der zweiten Führungsrolle gebildet. Durch Auswahl eines geeigneten Materials kann bei einer solchen Ausgestaltung neben einer ausreichenden Anpresskraft auch der Haftreibungskoeffizient in geeigneter Art und Weise hochgesetzt werden, da das Ringelement, wie bereits zuvor erläutert, unmittelbar an der Führungskurve anliegt. Hierdurch wird die Gefahr eines Entlangschleifens der Führungsrolle an der Führungskurve auch im Bereich niedriger Anpresskräfte wirksam verringert.

Gemäß einer alternativen oder ergänzenden Ausgestaltung weist zumindest eine der Führungsrollen eine radial innenliegende erste und eine radial außenliegende zweite Ringrolle auf, wobei das elastische Ringelement zwischen der ersten und der zweiten Ringrolle angeordnet ist. Eine solche Ausgestaltung ähnelt dabei einem sogenannten Radreifen, welcher beispielsweise auch aus der Eisenbahntechnik bekannt ist. Während die erste Ringrolle maßgeblich für die Stabilität verantwortlich ist, kann die zweite Ringrolle hinsichtlich des Materials in Ausgestaltung bezüglich des Abrollverhaltens an der Führungskurve ausgewählt werden. Das elastische Ringelement stellt dann eine Verbindung zwischen der inneren ersten und der äußeren zweiten Ringrolle her und bewirkt einerseits eine Federung und andererseits eine Vorspannung.

Eine alternative oder ergänzende Ausgestaltung sieht ferner vor, dass das elastische Ringelement an einer Anpressrolle gebildet ist, welche unmittelbar an zumindest einer der Führungsrollen in einer gemeinsamen Drehachse angrenzt und wobei das elastische Ringelement derart ausgebildet ist, dass es im Zuge einer Verformung zumindest teilweise reibschlüssig mit der zumindest einen angrenzenden Führungsrolle verbunden ist. Insbesondere ist die Anpressrolle unterhalb der ersten oder oberhalb der zweiten Führungsrolle angeordnet, wobei die Anordnung sich insbesondere daran richtet, wo die Steueraktion erfolgt. Insbesondere bei einer Steueraktion oberhalb der Führungsrollenanordnung ist eine Anordnung der Anpressrolle unterhalb der ersten Führungsrolle bevorzugt. Bei einer Steueraktion unterhalb der Führungsanordnung ist die Anpressrolle bevorzugt oberhalb der zweiten Führungsrolle angeordnet. Gemäß einer solchen Ausgestaltung verformt sich die Anpressrolle durch Eingreifen bzw. Abrollen an der zugeordneten Führungskurve insbesondere in eine radiale Richtung, wobei zugleich auch in axialer Richtung eine gewisse Verformung erfolgt. Hierdurch liegt sich die Anpressrolle an der zugeordneten Führungsrolle an und bewirkt einen Reibschluss, wodurch die Führungsrolle mitrotiert. Folglich wird durch die Verformung der Anpressrolle die Rotation der Anpressrolle auf die zumindest eine Führungsrolle übertragen. Dies kann Beispielfall dadurch erfolgen, dass die Anpressrolle radial außenliegend im Querschnitt labyrinthförmig ausgebildet ist, sodass dieser Abschnitt durch Aufbringen einer Querkraft, insbesondere einer Kraft in radialen Richtung, in axiale Richtung aufgewölbt wird. Dieser Abschnitt schließt üblicherweise an ein bezüglich der Drehachse radial innenliegendes Anpresswälzlager an, über das sichergestellt wird, dass das entsprechend ausgebildete elastische Ringelement an der Führungskurve abrollt.

Wie bereits eingangs erläutert, ist es ausreichend, wenn die Führungskurven lediglich jeweils entlang eines sich überschneidenden und sich in Umfangsrichtung erstreckenden Führungsabschnittes angeordnet sind. Entsprechend müssen die Führungskurven nicht beide jeweils den gesamten Transportpfad abbilden. Vielmehr reicht es aus, wenn der Transportpfad lediglich in einem Abschnitt durch eine der Führungskurven gebildet ist. Selbstverständlich bilden aber beide Führungskurven gemeinsam den Transportpfad ab, wobei der Transportpfad gemäß einer bevorzugten Ausgestaltungsweise auch umlaufend ausgebildet ist.

Eine Weiterbildung der Erfindung sieht ferner vor, dass die Führungsrollenanordnung über 70 % der Länge, bevorzugt über zumindest 80 % der Länge des Transportpfades schlupffrei geführt ist. Entsprechend ist zumindest eine der Führungsrollen stets mit einer der Führungskurven in Eingriff und rollt an dieser ab, wobei durch das Ringelement sichergestellt wird, dass die Führungsrollen stets mit einer ausreichenden Anpresskraft an den Führungskurven anliegen und wobei durch die schlupffreie Führung Schläge der Führungsrollen an die Führungskurve z. B. beim Flankenwechsel verhindert wird.

Die Erfindung ist grundsätzlich nicht auf eine bestimmte Form der Behälterbehandlungsanlage beschränkt, so kann die Behälterbehandlungsanlage beispielsweise eine Füllvorrichtung, eine Verschließvorrichtung oder eine Etikettiervorrichtung aufweisen. Besonders bevorzugt ist jedoch eine Ausgestaltung, bei der die Behälterbehandlungsanlage eine Blasvorrichtungen, insbesondere eine Streckblasvorrichtung, zum Umformen von Vorformlingen zu Getränkeflaschen aufweist. Hierbei ist entsprechend eine Blasvorrichtungen mit einem rotierbaren Träger und einer Vielzahl von in Umfangsrichtung an dem Träger angeordneten Behandlungsmodulen vorgesehen, welche als Blasmodule ausgebildet sind und jeweils eine Blasform aus zumindest zwei Blasformteilen aufweisen. Den Blasformen ist darüber hinaus üblicherweise eine Ventilvorrichtung zugeordnet, über die das entsprechende Blasfluid z. B. Druckluft oder ein flüssiges Füllmedium in die Behälter eingeführt werden kann. Gemäß einer üblichen Ausgestaltung von Blasvorrichtungen sind die Ventileinrichtungen stationär zu den Blasformen angeordnet und rotieren somit ebenfalls an dem Träger mit. Die Führungskurven können dann entsprechend entlang des Umfangs des rotierbaren Trägers stationär angeordnet sein, sodass die Führungsrollen im Zuge einer Rotation des Trägers an den Führungskurven abrollen können.

Ausgehend von einer solchen Ausgestaltung eignet sich der Einsatz eines entsprechenden Stellantriebes für verschiedene Anwendungszwecke. Gemäß einer ersten Ausgestaltungsform ist der Stellantrieb dazu eingerichtet, die Blasformen durch Verschwenken der Blasformteile zueinander zu Öffnen oder zu Schließen. Hierzu sind die Blasformteile üblicherweise zueinander verschwenkbar ausgebildet, wobei in einem geöffneten Zustand ein Vorformling eingesetzt oder der bereits fertig ausgebildete Behälter in Form einer Getränkeflasche entnommen werden kann. Die eigentliche Beanspruchung mit einem Blasfluid erfolgt entsprechend in einem Schließzustand. Gemäß einer üblichen Ausgestaltung weist die Blasvorrichtung zumindest zwei verschwenkbare Blasformteile auf, welche insbesondere die seitlichen Wandungen der Behälter bilden. Gemäß einer bevorzugten Ausgestaltung kann darüber hinaus auch ein unteres Blasformteil oder Bodenteil vorgesehen sein, welches die Ausgestaltung des Bodens definiert. Zum Verschwenken der Blasformteile ist dann entsprechend der Stellantrieb vorgesehen, wobei gerade im Rahmen eines solchen Anwendungszweckes vergleichsweise große Kräfte notwendig sind, um die Blasformteile zu bewegen.

Eine bevorzugte Ausgestaltung sieht daher in diesem Zusammenhang vor, dass die Blasformteile über eine Hebelanordnung, insbesondere eine Kniehebelanordnung, verschwenkbar zueinander eingerichtet, wobei die Hebelanordnung an eine rotierbar um eine Schwenkachse ausgebildeten Betätigungswelle anschließt, an welcher ein Anlenkhebel zum Betätigen der Hebelanordnung angeordnet ist und wobei die Führungsrollenanordnung an dem Anlenkhebel angeordnet ist. Gemäß der üblichen Ausgestaltung einer solchen Blasvorrichtung bewirkt die Kurvenführung, dass die Führungsrollen entweder bezogen auf den Träger radial nach innen oder nach außen gedrückt werden, wobei einerseits ein Öffnen und andererseits ein Schließen der Blasform bewirkt wird. Grundsätzlich ist es ausreichend, wenn die Führungskurven lediglich in einem Übergangsbereich angeordnet ist, in welchem ein Öffnen und Schließen der Blasform erforderlich ist. Darüber hinaus kann über die Hebelanordnung aber auch ein Zuhalten der Blasform bewirkt werden, sodass dann entsprechend entlang des gesamten Umfangs des Trägers zumindest eine Führungskurve vorzusehen ist.

Gerade aufgrund der großen Kräfte, die bei einer solchen Ausgestaltung auf die Führungsrollen wirken, ist die erfindungsgemäße Ausbildung mit einem elastischen Ringelement besonders von Vorteil, da insbesondere auf die Führungsrollen einwirkende Stöße zu einem gewissen Maße aufgenommen werden können.

Eine ergänzende oder alternative Ausgestaltung der Erfindung sieht ferner vor, dass die Blasmodule jeweils eine der Blasform zugeordnete Ventileinrichtung zum Einbringen eines Blasfluids in die Behälter aufweisen, wobei die Ventileinrichtungen jeweils eine Reckstange aufweisen, über welche eine Längung der Behälter entlang der Behälterachse bewirkt wird. Eine solche Ausgestaltung ist insbesondere dann sinnvoll, wenn es sich bei den Behältern um Behälter aus Polyethylenterephthalat handelt. Diese Reckstange wird entlang der Behälterachse verfahren. Dies erfolgt nunmehr erfindungsgemäß mit einem zuvor beschriebenen Stellantrieb.

Eine weitere Alternative oder ergänzende Ausgestaltung sieht vor, dass der Blasvorrichtung eine Heizvorrichtung mit einer umlaufenden Kette und einer Vielzahl von Umfangsrichtung an der Kette angeordneten Behandlungsmodulen vorgeschaltet ist. Über eine entsprechende Heizvorrichtung erfolgt das Erwärmen und Aufweichen der Vorformlinge, sodass die plastische Verformung in einfacher und effektiver Art und Weise durchgeführt werden kann. Hierzu werden die Behälter an Transportdornen angeordnet, welche üblicherweise über einen Kettenantrieb entlang von Heizeinrichtungen bewegt werden. Über diese Heizeinrichtungen erfolgt das Aufprägen von Strahlungswärme. Diese Transportdorne sind vorzugsweise entlang der Behälterachse verfahrbar angeordnet, wobei durch diese Bewegung die Transportdorne in die Behältermündung eingeführt und dort klemmend angeordnet werden können. Auch diese Bewegung kann nunmehr über einen entsprechend eingerichteten Stellantrieb bewirkt werden.

Grundsätzlich sind auch weitere Anwendungszwecke im Rahmen der Erfindung möglich. Gerade im Rahmen von Blasvorrichtungen kann mithilfe einer solchen Ausgestaltung auch ein Verschließen der Blasform bewirkt werden, wobei dann mithilfe des Stellantriebs ein separater Schließmechanismus verstellt wird.

Darüber hinaus kann die Behälterbehandlungsanlage auch eine Etikettiervorrichtung zum Etikettieren der Behälter und/oder eine Verschließvorrichtung zum Verschließen der Behälter aufweisen, wobei der Stellantrieb dann zum Steuern der Etikettiervorrichtung und/oder der Verschließvorrichtung eingerichtet sein kann.

Im Folgenden wird die Erfindung anhand eines exemplarischen und nicht beschränkten Ausführungsbeispiels näher erläutert. Die Figuren zeigen:
- Fig. 1: ein Ausschnitt aus einer Behälterbehandlungsanlage mit Blasvorrichtung aus dem Stand der Technik in einer isometrischen Ansicht
- Fig. 2: ein Ausschnitt aus der Darstellung gemäß der Figur 1 im Bereich der einzelnen Blasmodule
- Fig. 3: eine Führungsrollenanordnung mit radial außenliegendem Ringelement
- Fig. 4: eine alternative Führungsrollenanordnung mit Ringelement zwischen einer inneren und einer äußeren Ringrolle
- Fig. 5: eine alternative Führungsrollenanordnung mit separater Anpressrolle

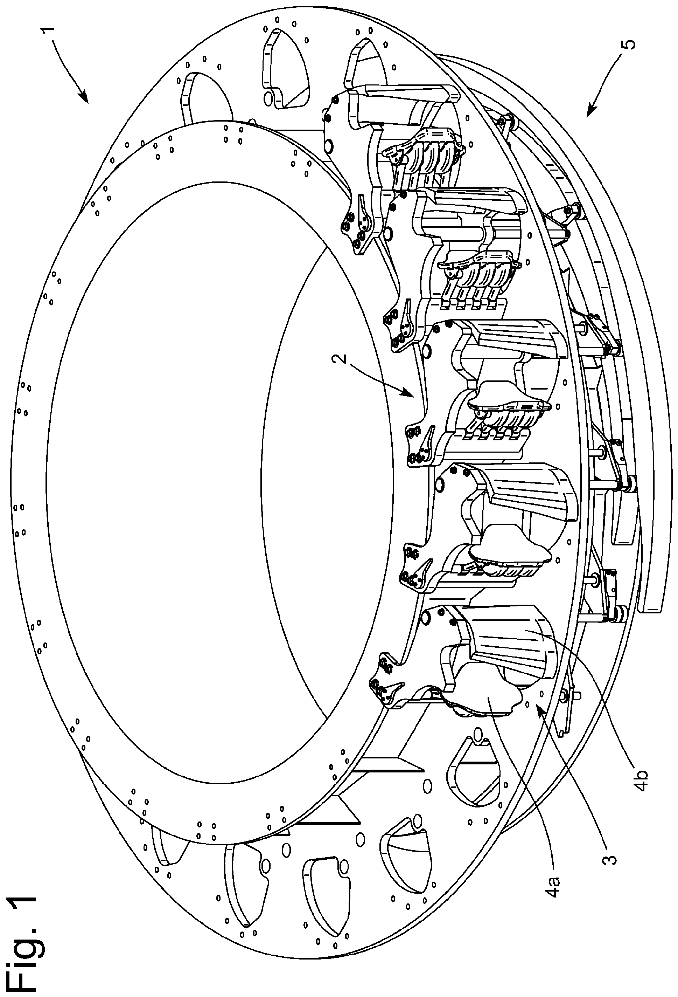

Die Figur 1 zeigt einen Ausschnitt aus einer Behälterbehandlungsanlage aus dem Stand der Technik, welche in vielerlei Hinsicht mit der erfindungsgemäßen Blasanlage übereinstimmt. Demnach ist ein rotierbar angetriebener Träger 1 vorgesehen, wobei eine Vielzahl von Behandlungsmodule 2 in Umfangsrichtung an dem Träger 1 angeordnet sind, welche als Blasmodule ausgebildet sind. Jedes Behandlungsmodul 2 besteht aus einer Blasform 3, welcher einer Ventileinrichtung zugeordnet ist und welche in der Figur 1 nicht näher dargestellt ist. Über diese Ventileinrichtung ist es möglich, die in der Blasform 3 angeordneten Vorformlinge aus einem thermoplastischen Material mit einem Blasfluid zu beaufschlagen, so dass eine Ausformung zu Getränkebehältern erfolgen kann. Die Blasform 3 besteht aus zumindest zwei Blasformteilen 4a, 4b, wobei lediglich ein erstes Blasformteil 4a verschwenkbar ausgebildet ist.

Das Verschwenken des ersten Blasformteils 4a dient dem Öffnen und Schließen der Blasform 3, wobei in der Öffnungsstellung der entsprechenden Blasform 3 ein Vorformling in die Blasform 3 eingesetzt bzw. ein fertig ausgebildeter Getränkebehälter entnommen werden kann. Das Öffnen und Schließen der Blasform 3 erfolgt über einen als Kurvenführung ausgebildeten Stellantrieb 5 mit Führungskurven 5a, 5b, welche lediglich abschnittsweise entlang des Umfangs des rotierbaren Trägers 1 angeordnet sind, wobei dieser Bereich als Übergabebereich bezeichnet wird.

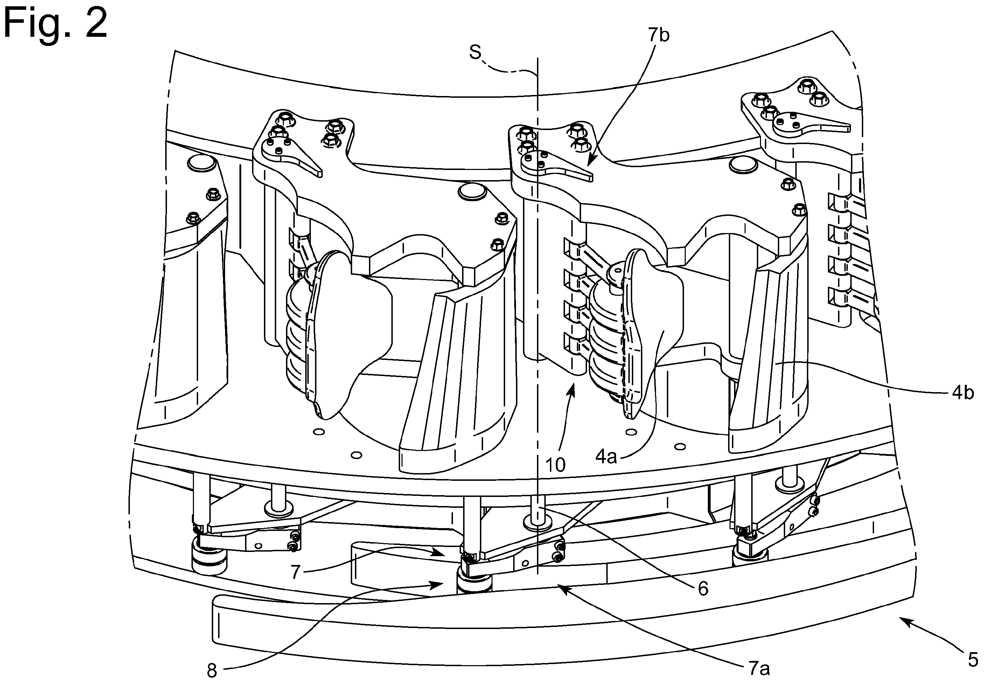

Die genaue Funktionsweise des Schwenkmechanismus geht insbesondere aus der Figur 2 deutlich hervor. Demnach schließt das erste Blasformteil 4a über eine Kniehebelanordnung 10 an eine um eine Schwenkachse S rotierbar ausgebildete Betätigungswelle 6 an. An dieser Betätigungswelle 6 ist wiederum endseitig ein Anlenkhebel 7a angeordnet, welcher eine Führungsrollenanordnung 8 aufweist, über welche der Anlenkhebel 7a in die Führungskurven 5a, 5b eingreift. Die Führungskurven 5a, 5b sind gegenüberliegend angeordnet, sodass der Anlenkhebel 7a bezogen auf den Träger 1 sowohl radial nach innen als auch nach außen gedrückt werden kann, wodurch ein Öffnen und Schließen der Blasform 3 bewirkt wird. Mit Hilfe eines Betätigungshebels 7b kann ein manuelles Öffnen und Schließen der Blasform 3 erfolgen.

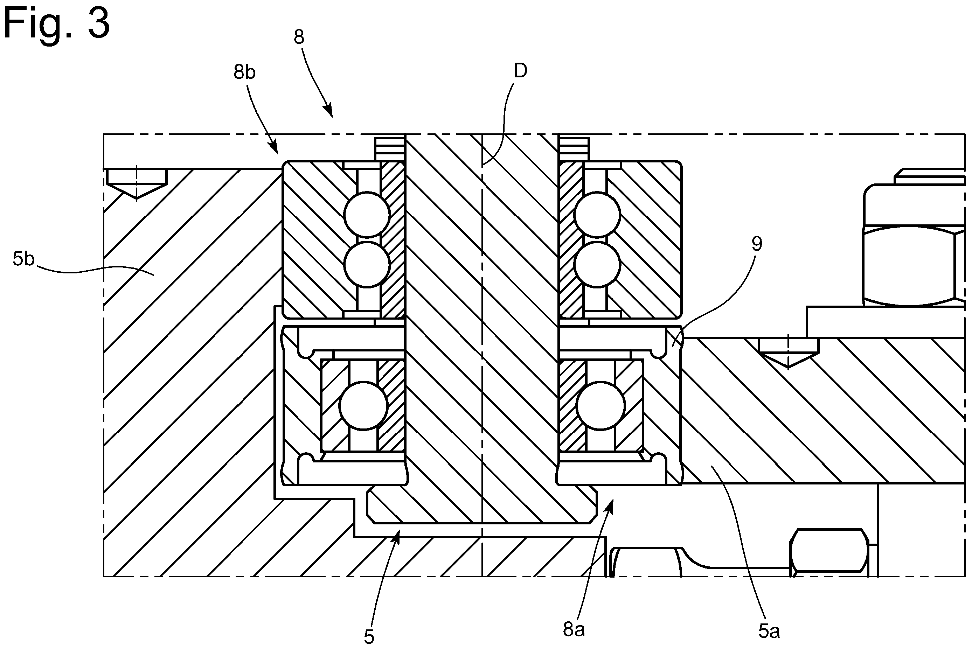

Die Figur 3 zeigt die Führungsrollenanordnung 8 mit einer unteren ersten Führungsrolle 8a und einer oberen zweiten Führungsrolle 8b, welche in einer gemeinsamen Drehachse D angeordnet sind. Die erste Führungsrolle ist hierbei so ausgebildet, dass diese an einer ersten, radial innenliegenden Führungskurve 5a abrollt, während die zweite Führungsrolle 8b an einer zweiten, radial außenliegenden Führungskurve 5b abrollt.

Anhand der Figur 3 ist deutlich zu erkennen, dass die Führungsrollenanordnung 8 schlupffrei in der Stellkurvenanordnung 5 geführt ist, bzw. dass bezüglich einer radialen Richtung kein Spalt zwischen der Führungskurvenanordnung 5 und der Führungsrollenanordnung 8 vorliegt. Dies wird gewährleistet durch ein Ringelement 9, welches aus einem elastisch verformbaren Material gebildet ist und welches im Fall der in der Figur 3 gezeigten Ausgestaltungsform radial außenliegend an der ersten Führungsrolle 8a angeordnet ist. Dementsprechend liegt dieses Ringelement 9 unmittelbar an der ersten Führungskurve 5a an und bewirkt, dass beide Führungsrollen 8a, 8b mit einem ausreichend großen Anpressdruck an die zugeordneten Führungskurven 5a, 5b gepresst werden. Dies wird insbesondere dadurch erreicht, dass das Ringelement 9 außerhalb der Führungskurvenanordnung 5 mit einem Übermaß ausgebildet ist, bzw. dass die erste Führungsrolle 8a außerhalb der Führungskurvenanordnung 5 einen Radius zeichnet, welcher kleiner ist als der Radius der ersten Führungskurve 5a.

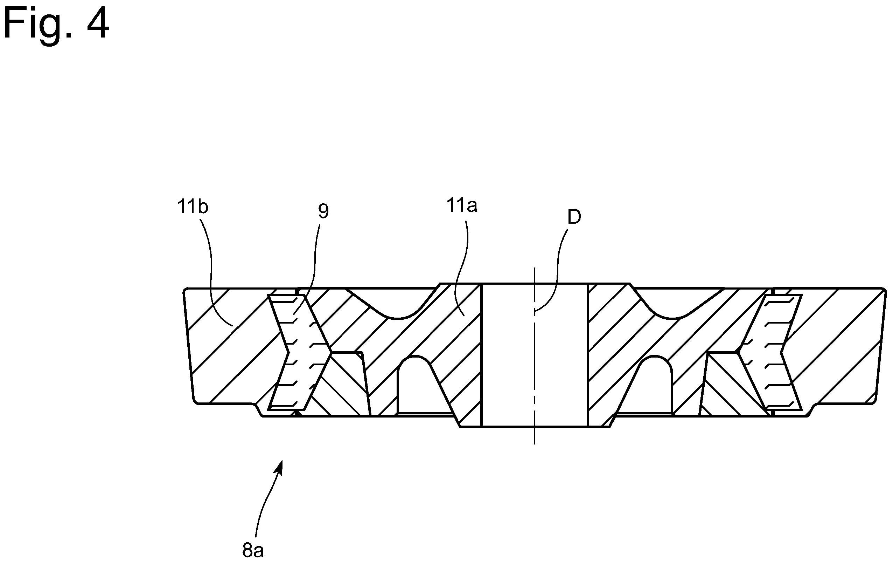

Gemäß einer alternativen Ausgestaltung ist in der Figur 4 eine Führungsrolle 8a nach Art eines Radreifens gezeigt, wobei das Ringelement 9 zwischen einer inneren und einer äußeren Ringrolle 11a, 11b angeordnet ist, sodass im Gegensatz zu der in der Figur 3 gezeigten Ausgestaltungsform nicht das Ringelement 9 sondern vielmehr die äußere Ringrolle 11b an der Führungskurve 5a anliegt.

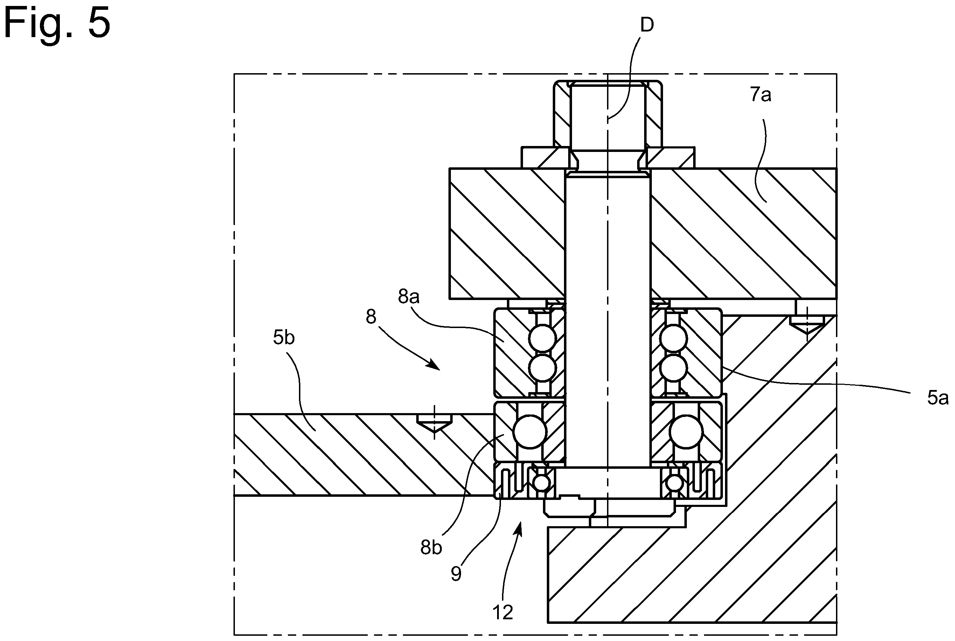

Auch gemäß der in der Figur 5 gezeigten Ausgestaltungsform sind eine erste Führungsrolle 8a und eine zweite Führungsrolle 8b an dem Anlenkhebel 7a in einer gemeinsamen Drehachse D befestigt und bilden gemeinsam die Führungsrollenanordnung 8. Die erste Führungsrolle 8a rollt an der inneren Führungskurve 5a und die zweite Führungsrolle 8b an der zweiten Führungskurve 5b ab, wobei nunmehr der zweiten Führungsrolle 8b ein Ringelement 9 aus einem elastisch verformbaren Material zugeordnet ist, welches in diesem Fall Teil einer separaten unterhalb der zweiten Führungsrolle 8b angeordneten Anpressrolle 12 ist. Das Ringelement 9 rollt hierbei analog zu der zweiten Führungsrolle 8b an der zweiten Führungskurve 5b ab und weist einen labyrinthförmigen Abschnitt im Bereich des Ringelementes 9 auf, welcher unmittelbar an der zweiten Führungsrolle 8b anliegt. Durch Einwirken einer radialen Kraft durch die zweite Führungskurve 5b wird das Ringelement 9 gegen den äußeren Abschnitt der zweiten Führungsrolle 8b gedrückt und bewirkt, dass die Führungsrolle 8b in geeigneter Art und Weise und im wesentlichen reibungsfrei an der zweiten Führungskurve 5b abrollt.

### Bezugszeichenliste

- 1: Träger
- 2: Blasmodul
- 3: Blasform
- 4a, 4b: Blasformteile
- 5: Stellantrieb
- 5a: erste Führungskurve
- 5b: zweite Führungskurve
- 6: Betätigungswelle
- 7a: Anlenkhebel
- 7b: Betätigungshebel
- 8: Führungsrollenanordnung
- 8a: erste Führungsrolle
- 8b: zweite Führungsrolle
- 9: Ringelement
- 10: Kniehebelanordnung
- 11a: innere Ringrolle
- 11b: äußere Ringrolle
- 12: Anpressrolle
- D: Drehachse
- S: Schwenkachse

## Patentansprüche

1. Behälterbehandlungsanlage mit zumindest einer eine Vielzahl von Behandlungsmodulen (2) aufweisenden Transportvorrichtung, wobei die Behandlungsmodule (2) dazu eingerichtet sind, Behälter während eines Transports entlang eines Transportpfades zu behandeln und mit zumindest einem als Kurvenführung ausgebildeten Stellantrieb (5) zum Steuern der Behandlungsmodule (2), wobei der Stellantrieb (5) jeweils eine an den Behandlungsmodulen (2) angeordnete Führungsrollenanordnung (8) aufweist, wobei eine erste Führungsrolle (8a) mit einer ersten Führungskurve (5a) und eine zweite Führungsrolle (8b) mit einer gegenüberliegenden zweiten Führungskurve (5b) in Eingriff gebracht werden kann,
**dadurch gekennzeichnet, dass**
die Führungsrollenanordnung (8) zumindest ein elastisch verformbares Ringelement (9) aufweist.

2. Behälterbehandlungsanlage nach einem der vorangegangenen Ansprüche, **dadurch gekennzeichnet, dass** das elastische Ringelement (9) in einem an die erste und/oder die zweite Führungskurve (8a, 8b) angepressten Zustand gegenüber einem kraftfreien Zustand zwischen 0,05 und 0,8 mm verformt ist.

3. Behälterbehandlungsanlage nach einem der vorangegangenen Ansprüche, **dadurch gekennzeichnet, dass** die zweite Führungsrolle (8b) oberhalb der ersten Führungsrolle (8a) in einer gemeinsamen Drehachse (D) angeordnet ist, wobei das elastische Ringelement (9) an einer der Führungsrollen (8a, 8b) angeordnet oder gebildet ist.

4. Behälterbehandlungsanlage nach einem der vorangegangenen Ansprüche, **dadurch gekennzeichnet, dass** das elastische Ringelement (9) radial außerhalb an einer der Führungsrollen (8a, 8b), insbesondere an der zweiten Führungsrolle (8b), angeordnet ist.

5. Behälterbehandlungsanlage nach einem der vorangegangenen Ansprüche 1 bis 3, **dadurch gekennzeichnet, dass** eine der Führungsrollen (8a, 8b) eine radial innenliegende erste und eine radial außenliegende zweite Ringrolle (11a, 11b) aufweist, wobei das elastische Ringelement (9) zwischen der ersten und der zweiten Ringrolle (11a, 11b) angeordnet ist.

6. Behälterbehandlungsanlage nach einem der vorangegangenen Ansprüche, **dadurch gekennzeichnet, dass** das elastische Ringelement (9) an einer Anpressrolle (12) gebildet ist, welche unmittelbar an zumindest eine der Führungsrollen (8a, 8b) in einer gemeinsamen Drehachse (D) angrenzt und wobei das elastische Ringelement (9) derart ausgebildet ist, dass es im Zuge einer Verformung zumindest teilweise reibschlüssig mit der zumindest einen angrenzenden Führungsrolle (8a, 8b) verbunden ist.

7. Behälterbehandlungsanlage nach Anspruch 6, **dadurch gekennzeichnet, dass** die Anpressrolle (12) unterhalb der ersten und/oder oberhalb der zweiten Führungsrolle (8a, 8b) angeordnet ist.

8. Behälterbehandlungsanlage nach einem der vorangegangenen Ansprüche, **dadurch gekennzeichnet, dass** die Führungskurven (5a, 5b) lediglich jeweils entlang eines sich überschneidenden und sich in Umfangsrichtung erstreckenden Führungsabschnitts angeordnet sind.

9. Behälterbehandlungsanlage nach Anspruch 8, **dadurch gekennzeichnet, dass** die Führungsrollenanordnung (8) zumindest über 80 % der Länge des Transportpfades schlupffrei geführt ist.

10. Behälterbehandlungsanlage nach einem der vorangegangenen Ansprüche, **dadurch gekennzeichnet, dass** eine Blasvorrichtung mit einem rotierbaren Träger (1) und einer Vielzahl von in Umfangsrichtung an dem Träger (1) angeordneten Behandlungsmodulen (2) vorgesehen ist, welche als Blasmodule ausgebildet sind und jeweils eine Blasform (3) aus zumindest zwei Blasformteilen (4a, 4b) aufweisen.

11. Behälterbehandlungsanlage nach Anspruch 10, **dadurch gekennzeichnet, dass** der Stellantrieb (5) dazu eingerichtet ist, die Blasformen (3) durch Verschwenken der Blasformteile (4a, 4b) zueinander zu Öffnen oder zu Schließen.

12. Behälterbehandlungsanlage nach Anspruch 11, **dadurch gekennzeichnet, dass** die Blasformteile (4a, 4b) über eine Hebelanordnung verschwenkbar zueinander eingerichtet sind, wobei die Hebelanordnung an eine rotierbar um eine Schwenkachse (S) ausgebildete Betätigungswelle anschließt, an welcher ein Anlenkhebel (7a) zum Betätigen der Hebelanordnung angeordnet ist, und wobei die Führungsrollenanordnung an dem Anlenkhebel (7a) angeordnet ist.

13. Behälterbehandlungsanlage nach einem der Ansprüche 10 oder 12, **dadurch gekennzeichnet, dass** die Blasmodule (2) jeweils eine den Blasformen (3) zugeordnete Ventileinrichtung zum Einbringen eines Blasfluids in die Behälter aufweisen und wobei die Ventileinrichtungen jeweils eine Reckstange aufweisen, und wobei der Stellantrieb dazu eingerichtet ist, die Reckstangen entlang einer Behälterachse zu verfahren.

14. Behälterbehandlungsanlage nach einem Ansprüche 10 bis 12, **dadurch gekennzeichnet, dass** der Blasvorrichtung eine Heizvorrichtung mit einer umlaufenden Kette und einer Vielzahl von in Umfangsrichtung an der Kette angeordneten Behandlungsmodulen (2) vorgeschaltet ist, welche als Transportdorne zur Aufnahme der Behälter ausgebildet sind und entlang von Heizeinrichtungen bewegbar sind, wobei der Stellantrieb (5) dazu eingerichtet ist, die Transportdorne entlang einer Behälterachse zu verfahren.

## Claims

1. A container handling system with at least one transport device having a plurality of handling modules (2), wherein the handling modules (2) are set up to handle containers during transport along a transport path, and with at least one actuator (5) designed as a curve guide for controlling the handling modules (2), wherein the actuator (5) has a respective guide roller arrangement (8) arranged on the handling modules (2), wherein a first guide roller (8a) can be engaged with a first guide curve (5a) and a second guide roller (8b) can be engaged with an opposing second guide curve (5b),
**characterized in that**
the guide roller arrangement (8) has at least one elastically deformable ring element (9).

2. The container handling system according to one of the preceding claims, **characterized in that** the elastic ring element (9) in a state pressed against the first and/or the second guide curve (8a, 8b) is deformed by between 0.05 and 0.8 mm relative to a force-free state.

3. The container handling system according to one of the preceding claims, **characterized in that** the second guide roller (8b) is arranged above the first guide roller (8a) in a shared axis of rotation (D), wherein the elastic ring element (9) is arranged or formed on one of the guide rollers (8a, 8b).

4. The container handling system according to one of the preceding claims, **characterized in that** the elastic ring element (9) is arranged radially outside on one of the guide rollers (8a, 8b), in particular on the second guide roller (8b).

5. The container handling system according to one of the preceding claims, **characterized in that** one of the guide rollers (8a, 8b) has a radially inner first and a radially outer second ring roller (11a, 11b), wherein the elastic ring element (9) is arranged between the first and the second ring roller (11a, 11b).

6. The container handling system according to one of the preceding claims, **characterized in that** the elastic ring element (9) is formed on a pressure roller (12), which directly adjoins at least one of the guide rollers (8a, 8b) in a shared axis of rotation (D), and wherein the first elastic ring element (9) is designed in such way as to be at least in part frictionally coupled with the at least one adjoining guide roller (8a, 8b) during a deformation.

7. The container handling system according to claim 6, **characterized in that** the pressure roller (12) is arranged below the first and/or above the second guide roller (8a, 8b).

8. The container handling system according to one of the preceding claims, **characterized in that** the guide curves (5a, 5b) are each arranged only along a guide section that overlaps and extends in the circumferential direction.

9. The container handling system according to claim 8, **characterized in that** the guide roller arrangement (8) is guided slip-free over at least 80% of the length of the transport path.

10. The container handling system according to one of the preceding claims, **characterized in that** a blowing device with a rotatable carrier (1) and a plurality of handling modules (2) arranged on the carrier (1) in a circumferential direction are provided, which are designed as blow modules and each have a blow mold (3) comprised of at least two blow mold parts (4a, 4b).

11. The container handling system according to claim 10, **characterized in that** the actuator (5) is set up to open or close the blow molds (3) by swiveling the blow mold parts (4a, 4b) relative to each other.

12. The container handling system according to claim 11, **characterized in that** the blow mold parts (4a, 4b) are set up so that they can be swiveled relative to each other via a lever arrangement, wherein the lever arrangement connects to an actuating shaft designed so that it can rotate around a swiveling axis (S), on which is arranged a linkage lever (7a) for actuating the lever arrangement, and wherein the guide roller arrangement is arranged on the linkage lever (7a).

13. The container handling system according to one of claims 10 or 12, **characterized in that** the blow modules (2) each have a valve device allocated to the blow molds (3) for introducing a blowing fluid into the containers, and wherein the valve devices each have a horizontal bar, and wherein the actuator is set up to move the horizontal bars along a container axis.

14. The container handling system according to one of claims 10 to 12, **characterized in that** the blowing device has located upstream from it a heating device with a circumferential chain and a plurality of handling moules (2) arranged on the chain, which are designed as transport mandrels for holding the containers and can be moved along the heating devices, wherein the actuator (5) is set up to move the transport mandrels along a container axis.

## Revendications

1. Installation de traitement de conteneurs avec au moins un dispositif de transport comprenant une pluralité de modules de traitement (2), sachant que les modules de traitement (2) sont agencés pour traiter des conteneurs pendant un transport le long d'une chemin de transport et avec au moins un organe d'entraînement (5) constitué sous la forme d'un guidage à cames pour commander les modules de traitement (2), sachant que l'organe d'entraînement (5) comporte respectivement un système à rouleaux de guidage (8) disposé sur les modules de traitement (2), sachant qu'un premier rouleau de guidage (8a) peut être mis en prise avec une première came de guidage (5a) et un deuxième rouleau de guidage (8b) avec une deuxième came de guidage (5b) opposée,
***caractérisée en ce que***
le système à rouleaux de guidage (8) comporte au moins un élément annulaire (9) élastiquement déformable.

2. Installation de traitement de conteneurs selon la revendication précédente, ***caractérisée en* ce *que*** l'élément annulaire (9) élastiquement déformable est déformé entre 0,05 et 0,8 mm dans un état comprimé sur la première et/ou la deuxième came de guidage (8a, 8b) par rapport à un état à force nulle.

3. Installation de traitement de conteneurs selon l'une quelconque des revendications précédentes, ***caractérisée en ce que*** le deuxième rouleau de guidage (8b) est disposé au-dessus du premier rouleau de guidage (8a) dans un axe de rotation commun (D), sachant que l'élément annulaire élastique (9) est disposé ou formé sur un des rouleaux de guidage (8a, 8b).

4. Installation de traitement de conteneurs selon l'une quelconque des revendications précédentes, ***caractérisée en ce que*** l'élément annulaire (9) élastique est disposé radialement en dehors sur un des rouleaux de guidage (8a, 8b), en particulier sur le deuxième rouleau de guidage (8b).

5. Installation de traitement de conteneurs selon l'une quelconque des revendications précédentes 1 à 3, ***caractérisée en* ce qu'**un des rouleaux de guidage (8a, 8b) comporte un premier rouleau annulaire radialement à l'intérieur et un deuxième rouleau annulaire (11a, 11b) radialement à l'extérieur, sachant que l'élément annulaire élastique (9) est disposé entre le premier rouleau annulaire et le deuxième rouleau annuaire (11a, 11b).

6. Installation de traitement de conteneurs selon l'une quelconque des revendications précédentes, ***caractérisée en* ce *que*** l'élément annulaire (9) élastique est formé sur un rouleau de pression (12), lequel est directement limitrophe sur au moins un des rouleaux de guidage (8a, 8b) dans un axe de rotation commun (D) et sachant que l'élément annulaire (9) élastique est constitué de telle manière qu'il est relié au cours d'une déformation au moins en partie par conformité de frottement à au moins un rouleau de guidage limitrophe (8a, 8b).

7. Installation de traitement de conteneurs selon la revendication 6, ***caractérisée en* ce *que*** le rouleau de pression (12) est disposé en dessous du premier et/ou au-dessus du deuxième rouleau de guidage (8a, 8b).

8. Installation de traitement de conteneurs selon l'une quelconque des revendications précédentes, ***caractérisée en ce que*** les cames de guidage (5a, 5b) sont uniquement disposées respectivement le long d'une section de guidage se croisant et s'étendant dans le sens périphérique.

9. Installation de traitement de conteneurs selon la revendication 8, ***caractérisée en* ce *que*** le système à rouleaux de guidage (8) est guidé sans patinage au moins sur 80 % de la longueur du chemin de transport.

10. Installation de traitement de conteneurs selon l'une quelconque des revendications précédentes, ***caractérisée en* ce qu'**un dispositif de soufflage avec un support pouvant tourner (1) et une pluralité de modules de traitement (2) disposés dans le sens périphérique sur le support (1) est prévu, lesquels sont constitués sous la forme de modules de soufflage et comportent respectivement un moule de soufflage (3) composé d'au moins deux parties de moule de soufflage (4a, 4b).

11. Installation de traitement de conteneurs selon la revendication 10, ***caractérisée en* ce *que*** l' organe d'entraînement (5) est agencé pour ouvrir ou fermer les moules de soufflage (3) l'une par rapport à l'autre par pivotement des parties de moule de soufflage (4a, 4b).

12. Installation de traitement de conteneurs selon la revendication 11, ***caractérisée en* ce *que*** les parties de moule de soufflage (4a, 4b) sont agencées pouvant pivoter l'une par rapport à l'autre par un système de levier, sachant que le système de levier se raccorde à un arbre d'actionnement constitué pouvant tourner autour d'un axe de pivotement (S) sur lequel est disposé un levier articulé (7a) pour actionner le système de levier et sachant que le système à rouleaux de guidage est disposé sur le levier articulé (7a).

13. Installation de traitement de conteneurs selon l'une quelconque des revendications 10 ou 12, ***caractérisée en* ce *que*** les modules de soufflage (2) comportent respectivement un système de soupape attribué aux moules de soufflage (3) pour introduire un fluide de soufflage dans les conteneurs et sachant que les systèmes de soupape comportent respectivement une barre fixe et sachant que l'organe d'entraînement est agencé pour déplacer les barres fixes le long d'un axe de conteneur.

14. Installation de traitement de conteneurs selon l'une quelconque des revendications 10 à 12, ***caractérisée en* ce qu'**un dispositif de chauffage est monté en amont du dispositif de soufflage avec une chaîne rotative et une pluralité de modules de traitement (2) disposés sur la chaîne dans le sens de rotation, lesquels sont constitués sous la forme de mandrins de transport pour réceptionner les conteneurs et peuvent être déplacés le long des dispositifs de chauffage, sachant que l'organe d'entraînement (5) est agencé pour déplacer les mandrins de transport le long d'un axe de conteneur.
